(19)

Europäisches Patentamt

European Patent Office

Office européen des brevets

(11) **EP 4 601 042 A1**

(12) **EUROPEAN PATENT APPLICATION**
published in accordance with Art. 153(4) EPC

(43) Date of publication:
**13.08.2025 Bulletin 2025/33**

(21) Application number: **23876144.9**

(22) Date of filing: **27.04.2023**

(51) International Patent Classification (IPC):
*H01M 4/62* (2006.01)     *H01M 4/133* (2010.01)
*H01M 10/0525* (2010.01)     *C01B 32/00* (2017.01)

(52) Cooperative Patent Classification (CPC):
C01G 9/006; H01M 4/36; H01M 4/366; H01M 4/38;
H01M 4/58; H01M 4/583; H01M 4/587; H01M 4/62;
H01M 10/0525; H01M 2004/027; Y02E 60/10

(86) International application number:
**PCT/CN2023/091366**

(87) International publication number:
**WO 2024/077933 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.10.2022  CN 202211248809**

(71) Applicant: **Ningde Amperex Technology Limited
Ningde, Fujian 352100 (CN)**

(72) Inventors:
• **YI, Zheng
  Ningde, Fujian 352100 (CN)**
• **TAN, Fujin
  Ningde, Fujian 352100 (CN)**
• **ZHENG, Zigui
  Ningde, Fujian 352100 (CN)**
• **XIE, Yuansen
  Ningde, Fujian 352100 (CN)**

(74) Representative: **Icosa
  83 avenue Denfert-Rochereau
  75014 Paris (FR)**

(54) **HARD CARBON MATERIAL AND PREPARATION METHOD THEREFOR, ELECTROCHEMICAL DEVICE, AND ELECTRONIC DEVICE**

(57)     This application relates to a hard carbon material and a preparation method thereof, an electrochemical apparatus, and an electronic apparatus. The hard carbon material includes a porous skeleton, a first element, and element zinc, where the first element includes at least one of element nitrogen, element sulfur, element boron, element phosphorus or element selenium. A percentage of the first element with respect to a total mass of the hard carbon material is denoted by $A_1\%$, and a percentage of the element zinc with respect to the total mass of the hard carbon material is denoted by $A_2\%$, where the hard carbon material satisfies $1.5 \leq A_1/A_2 \leq 5$. When applied to an electrochemical apparatus, the hard carbon material in this application can significantly improve the energy density of the electrochemical apparatus.

FIG. 1

EP 4 601 042 A1

**Description**

**CROSS-REFERENCE TO RELATED APPLICATIONS**

This application claims priority to Chinese Patent Application No. 202211248809.7, filed on October 12, 2022 and entitled "HARD CARBON MATERIAL AND PREPARATION METHOD THEREOF, ELECTROCHEMICAL APPARATUS, AND ELECTRONIC APPARATUS", which is incorporated herein by reference in its entirety.

**TECHNICAL FIELD**

This application relates to the field of energy storage technologies, and more specifically, to a hard carbon material and a preparation method thereof, an electrochemical apparatus, and an electronic apparatus.

**BACKGROUND**

With features such as high energy density, high operating voltage, and light weight, electrochemical apparatuses have been widely applied to electronic products such as mobile phones, laptop computers, and cameras. In addition to electrochemical performance improvement, safety performance of the electrochemical apparatuses cannot be neglected. Higher performance requirements for electronic products drive the gradual increase of performance requirements for the electrochemical apparatuses.

It is found through research that the migration of active ions between the positive and negative electrode active substances within an electrochemical apparatus is a critical process of charging and discharging. Therefore, the negative electrode active substance greatly affects the energy density and other properties of an electrochemical apparatus. However, existing negative electrode active substances have a low reversible capacity and a low low-plateau capacity, so that electrochemical apparatuses using such negative electrode active substances have a low energy density.

**SUMMARY**

This application provides a hard carbon material and a preparation method thereof, an electrochemical apparatus, and an electronic apparatus. With a high reversible capacity and a high low-plateau capacity, the hard carbon material can significantly improve the performance of an electrochemical apparatus when applied to an electrochemical apparatus.

According to a first aspect, this application proposes a hard carbon material. The hard carbon material includes a porous skeleton, a first element, and element zinc, where the first element includes at least one of element nitrogen, element sulfur, element boron, element phosphorus or element selenium. A percentage of the first element with respect to a total mass of the hard carbon material is denoted by $A_1$ wt%, and a percentage of element zinc with respect to the total mass of the hard carbon material is denoted by $A_2$ wt%, where the hard carbon material satisfies $1.5 \leq A_1/A_2 \leq 5$.

In some embodiments, the first element includes element nitrogen, and $2 \leq A_1/A_2 \leq 4.5$.

In some embodiments, the first element includes element nitrogen, and a percentage of the first element with respect to the total mass of the hard carbon material is denoted by $W_1$ wt%, where $2 \leq W_1 \leq 5$.

In some embodiments, the first element includes at least one of element sulfur, element boron, element phosphorus or element selenium, and $2 \leq A_1/A_2 \leq 4$.

In some embodiments, the first element includes at least one of element sulfur, element boron, element phosphorus or element selenium, and a percentage of the first element with respect to the total mass of the hard carbon material is denoted by $W_2$ wt%, where $2.5 \leq W_2 \leq 9$.

In some embodiments, the percentage of element zinc with respect to the total mass of the hard carbon material is denoted by $A_2$ wt%, where $0.6 \leq A_2 \leq 1.2$.

In some embodiments, a lithium metal is used as a counter electrode of the hard carbon material, and in charge and discharge curves obtained by testing within a range of 0 V to 2.5 V vs $Li^+/Li$, a gram capacity measured in a range of 0 V (vs $Li^+/Li$) to 0.15 V (vs $Li^+/Li$) is denoted by $C_{11}$ mAh/g, and a gram capacity measured in the range of 0.15 V (vs $Li^+/Li$) to 0.8 V (vs $Li^+/Li$) is denoted by $C_{12}$ mAh/g, where the hard carbon material satisfies $1.6 \leq C_{11}/C_{12} \leq 2.1$.

In some embodiments, $250 \leq C_{11} \leq 350$.

In some embodiments, a sodium metal is used as the counter electrode of the hard carbon material, and in charge and discharge curves obtained by testing within a range of 0 V to 2.5 V vs $Na^+/Na$, a gram capacity measured in a range of 0 V (vs $Na^+/Na$) to 0.15 V (vs $Na^+/Na$) is denoted by $C_{21}$ mAh/g, and a gram capacity measured in the range of 0.15 V (vs $Na^+/Na$) to 1.00 V (vs $Na^+/Na$) is denoted by $C_{22}$ mAh/g, where the hard carbon material satisfies $3.55 \leq C_{21}/C_{22} \leq 3.95$.

In some embodiments, $300 \leq C_{21} \leq 340$.

In some embodiments, in an X-ray diffraction pattern of the hard carbon material, a diffraction peak appears in a range of a 2X scattering angle from 15° to 30°, and a 2X scattering angle of the diffraction peak is <24°.

In some embodiments, in a Raman spectrum pattern of the hard carbon material within a scanning range of 200 um * 500 um, a characteristic peak D appears in a wavenumber range of 1320 cm$^{-1}$ to 1370 cm$^{-1}$ and a characteristic peak G appears in a wavenumber range of 1570 cm$^{-1}$ to 1620 cm$^{-1}$, where a peak intensity of the characteristic peak D is $I_D$, a peak intensity of the characteristic peak G is $I_G$, and $0.5 < I_D/I_G \leq 1.5$.

In some embodiments, the hard carbon material further satisfies the following condition (1) and/or condition (2):

(1) a particle size by volume $D_v50$, in $\mu$m, of the hard carbon material satisfies $3 \leq D_v50 \leq 15$; and
(2) a particle size by volume $D_v99$, in $\mu$m, of the hard carbon material satisfies $10 \leq D_v99 \leq 45$.

In some embodiments, the hard carbon material further includes a carbon layer coated on the porous skeleton.

According to a second aspect, this application proposes a method for preparing a hard carbon material. The method includes: mixing a carbon-containing precursor material, a porogen containing element zinc, and a first material containing a first element well to form a mixed system; and performing heat treatment on the mixed system, so that the precursor material is carbonized and during a carbonization process, the porogen volatilizes and etches the precursor material to form a porous skeleton. The porous skeleton has the first element and element zinc. The first element includes at least one of element nitrogen, element sulfur, element boron, element phosphorus or element selenium. A percentage of the first element with respect to a total mass of the hard carbon material is denoted by $A_1$ wt%, and a percentage of the element zinc with respect to the total mass of the hard carbon material is denoted by $A_2$ wt%, where the hard carbon material satisfies $1.5 \leq A_1/A_2 \leq 5$.

In some embodiments, the heat treatment includes a first heat treatment and a second heat treatment, and a temperature for the first heat treatment is lower than a temperature for the second heat treatment.

In some embodiments, a carbon layer is coated on the porous skeleton.

According to a third aspect, this application proposes an electrochemical apparatus. The electrochemical apparatus includes a negative electrode plate, where the negative electrode plate includes the hard carbon material according to any one of the embodiments of the first aspect of this application or a hard carbon material prepared using the method according to any one of the embodiments of the second aspect of this application.

According to a fourth aspect, this application proposes an electronic apparatus including the electrochemical apparatus according to the third aspect of this application.

For the hard carbon material according to some embodiments of this application, when $1.5 \leq A_1/A_2 \leq 5$ is satisfied, the first element can be uniformly distributed in the porous skeleton. The binding of the first element and the element zinc allows the element zinc to be uniformly distributed in the porous skeleton, so that the porous skeleton has sufficient pore structures and pores are distributed more evenly, helping improve the reversible capacity and low-plateau capacity of the hard carbon material. Therefore, the hard carbon material can significantly improve the energy density of an electrochemical apparatus when applied to the electrochemical apparatus.

## BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.

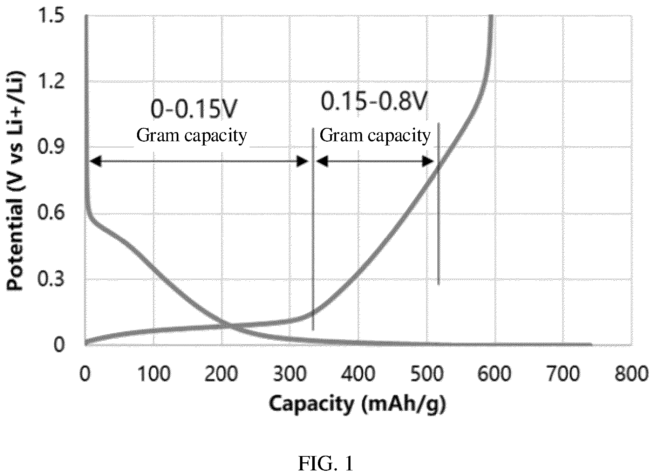

FIG. 1 is a diagram of charge and discharge curves of a lithium-ion battery according to example 1-5 of this application.

## DETAILED DESCRIPTION

Embodiments of this application are described in detail below. In the full text of the specification of this application, the same or similar components and components with the same or similar functions are indicated by similar reference signs. The embodiments in related accompanying drawings described herein are descriptive and illustrative, and are used to provide a basic understanding of this application. The embodiments of this application shall not be construed as a limitation on this application.

In addition, quantities, ratios, and other values are sometimes presented in the format of ranges in this specification. It should be understood that such range formats are used for convenience and simplicity and should be flexibly understood as including not only values clearly designated as falling within the range but also all individual values or sub-ranges covered by the range as if each value and sub-range are clearly designated.

In specific embodiments and claims, a list of items connected by the terms "at least one of", "one piece of", "one kind of" or other similar terms may mean any one of the listed items. For example, if items A and B are listed, the phrase "at least one of A or B" means only A; only B; or A and B. In another example, if items A, B, and C are listed, the phrase "at least one of A, B or C" means only A; only B; only C; A and B (exclusive of C); A and C (exclusive of B); B and C (exclusive of A); or all of A, B, and C. The item A may contain a single element or a plurality of elements. The item B may include a single element or a plurality of elements. The item C may include a single element or a plurality of elements.

An electrochemical apparatus includes a positive electrode plate, a negative electrode plate, and a separator. The negative electrode plate includes a negative electrode active substance, and the negative electrode active substance includes graphite, hard carbon, and the like. The theoretical capacity of graphite is 372 mAh/g, which is almost reached through development in recent years. Therefore, there is little room for further improvement. Due to advantages such as small volume swelling, strong capability in fast charging and discharging, and high gram capacity, hard carbon materials have been extensively studied. The inventors have found through research that hard carbon materials have low reversible capacity and low-plateau capacity which limit the energy density of the electrochemical apparatus.

In view of this, the inventors make pores on the hard carbon materials for the improvement purpose. This makes the hard carbon materials a porous structure, thereby increasing the reversible capacity and low-plateau capacity of the hard carbon materials. The following further describes the solutions in this application.

Hard carbon material

A first aspect of this application proposes a hard carbon material. The hard carbon material includes a porous skeleton, a first element, and element zinc, where the first element includes at least one of element nitrogen, element sulfur, element boron, element phosphorus or element selenium. A percentage of the first element with respect to the total mass of the hard carbon material is denoted by $A_1$ wt%, and a percentage of the element zinc with respect to the total mass of the hard carbon material is denoted by $A_2$ wt%, where the hard carbon material satisfies $1.5 \leq A_1/A_2 \leq 5$. Although the mechanism is still unclear, the hard carbon material of this application satisfying the foregoing relationship provides a high reversible capacity and a high low-plateau capacity, and can improve the energy density and other properties of an electrochemical apparatus when applied to the electrochemical apparatus.

The inventors speculate that the mechanism of action of this application is as follows:

The microstructure of the hard carbon material has short-range ordered micro-domains formed by disordered stacking of curved graphite-like sheets, and also has defects such as microporous structures. During a charging process, active ions such as lithium ions and sodium ions migrate from a positive electrode active substance to a negative electrode active substance, for example, a hard carbon material, and intercalate to the hard carbon material. In the charge and discharge curves of the hard carbon material storing active ions, a low-voltage plateau segment (0 V to 0.15 V vs Li$^+$/Li) indicates a capacity provided by insertion of lithium ions or sodium ions into hard carbon pores, and a high-voltage slash segment (0.15 V to 0.8 V) indicates a capacity provided by intercalation of lithium ions to hard carbon crystallite layers or absorption of sodium ions to end faces of hard carbon crystallites. In the charge and discharge curves, the segment with a low voltage is generally considered more conducive to contributing energy density. Therefore, improving the capacity in the low-voltage plateau segment can significantly increase the energy density of an electrochemical apparatus.

Optionally, the hard carbon material can be obtained by hydrothermal or chemical treatment on a precursor material. The precursor material includes at least one of a resin-based precursor, a pitch-based precursor or a biomass-based precursor. For example, the resin-based precursor includes at least one of phenolic resin, epoxy resin or polyfurfuryl alcohol. The pitch-based precursor includes at least one of coal tar pitch, petroleum pitch or natural pitch. The biomass-based precursor includes at least one of cellulose, lignin, starch, chitosan, sucrose or glucose. Compared with hard carbon formed by a high-molecular-weight precursor, hard carbon formed by a low-molecular-weight precursor has more defects and can provide more active sites for active ions, increasing the capacity of the hard carbon material. The precursor material of this application is optionally a biomass-based precursor.

The porous skeleton has the element zinc. The element zinc is mainly distributed inside the porous skeleton or distributed on a surface of the porous skeleton. In a process of preparing the hard carbon material, a porogen containing the element zinc is selected, for example, at least one of zinc gluconate, zinc citrate, zinc sulfate or zinc nitrate. The porogen can volatilize during a carbonization process of the precursor material, and therefore etches the structure of the precursor material to form pores, so that the hard carbon material formed after the carbonization has a porous skeleton. The formation of the porous skeleton increases the pore volume and intercalation sites for active ions, which can significantly increase the reversible capacity of the hard carbon material, especially the capacity in the low-plateau segment.

The porous skeleton has the first element. The first elements are mainly distributed inside the porous skeleton or distributed on the surface of the porous skeleton. In a process of preparing the hard carbon material, a first material containing the first element is selected. For example, when the first element includes the element nitrogen, the first material may include melamine, carbamide, dicyandiamide, and the like. For another example, when the first element includes the element sulfur, the first material may correspondingly include sulfur powder. For another example, when the first element includes the element boron, the first material may correspondingly include boric acid. For another example, when the first element includes the element phosphorus, the first material may include ammonium dihydrogen phosphate. For another example, when the first element includes the element selenium, the first material may correspondingly include diphenyl selenium. The precursor material is mixed with a substance containing the first element. The first element can be uniformly distributed in the precursor material, and the first element can provide binding sites for the element zinc, facilitating uniform distribution of the element zinc. This allows the porogen to make pores uniformly, so that the pore structures in the hard carbon material are distributed more evenly and the pores are utilized more sufficiently, thus improving the first-cycle coulombic efficiency of the electrochemical apparatus. In addition, the first element has good lithium affinity, facilitating intercalation of lithium ions into the porous skeleton and further increasing the capacity at a low-plateau voltage significantly.

Although the porous skeleton, the first element, and the element zinc of the hard carbon material are analyzed above separately, they form an organic whole, are interrelated, and jointly affect the final performance of the hard carbon material. When the hard carbon material of this application satisfies $1.5 \leq A_1/A_2 \leq 5$, the first element can be uniformly distributed in the porous skeleton. The binding of the first element and the element zinc allows the element zinc to be uniformly distributed in the porous skeleton, so that the porous skeleton has sufficient pore structures and pores are distributed more evenly, helping improve the reversible capacity and low-plateau capacity of the hard carbon material. Therefore, the hard carbon material can significantly improve the energy density of an electrochemical apparatus when applied to the electrochemical apparatus. For example, $A_1/A_2$ may be 1.5, 2, 2.5, 3, 3.5, 4, 4.5, or 5, or within a range between any two of the foregoing values.

In this application, the infiltration of active ions, for example, lithium ions, in the hard carbon material can be adjusted by controlling the amount of the first element added. As the amount of the first element added increases, the infiltration of lithium ions becomes better, making it easier for lithium ions to intercalate to the porous skeleton and facilitating the capacity at a low-plateau voltage. The number of binding sites for the element zinc can also be adjusted. As the amount of the first element added increases, more binding sites are provided for the element zinc, which allows the element zinc to be distributed more evenly, thus facilitating more uniform formation of pores. In this application, the reversible capacity, low-plateau capacity, and structural stability of the hard carbon material can be further improved when the amount of the first element added satisfies at least one of the following conditions.

In some embodiments, the first element includes the element nitrogen, and $2 \leq A_1/A_2 \leq 4.5$.

In some embodiments, the first element includes the element nitrogen, and a percentage of the first element with respect to the total mass of the hard carbon material is denoted by $W_1$ wt%, where $2 \leq W_1 \leq 5$. For example, the percentage $W_1$ wt% of the first element may be 2 wt%, 3 wt%, 4 wt%, or 5 wt%, or within a range between any two of the foregoing values. The percentage of the element nitrogen can be tested using a device and method known in the art. For example, an elemental analyzer can be used for analysis and test. Specifically, a sample is put in the elemental analyzer and then burned fully into an elemental substance by heating, a condenser is used to remove the moisture in the sample, a reduction reaction tube is used to eliminate unnecessary compounds and oxygen and convert nitrogen oxides into nitrogen, moisture in the sample is removed again, and the percentage of nitrogen is tested.

In some embodiments, the first element includes at least one of the element sulfur, the element boron, the element phosphorus or the element selenium, and $2 \leq A_1/A_2 \leq 4$.

In some embodiments, the first element includes at least one of the element sulfur, the element boron, the element phosphorus or the element selenium, and a percentage of the first element with respect to the total mass of the hard carbon material is denoted by $W_2$ wt%, where $2.5 \leq W_2 \leq 9$. For example, the percentage $W_2$ wt% of the first element may be 2.5 wt%, 3 wt%, 4 wt%, or 5 wt%, or within a range between any two of the foregoing values. The percentages of the element sulfur, the element boron, the element phosphorus, and the element selenium can be tested using devices and methods known in the art. For example, an elemental analyzer can be used for analysis and test. Specifically, elements such as the element sulfur, the element boron, the element phosphorus, and the element selenium are quantitatively obtained using X-ray photoelectron spectroscopy XPS.

In this application, the pore structure of the porous skeleton of the hard carbon material can be adjusted by controlling the amount of the element zinc added. Too little the element zinc may lead to fewer pores of the porous skeleton, with insignificant changes to the pore volume of the hard carbon material, which is not conductive to the increase of the capacity on the low-voltage plateau. As more the element zinc is added, more pores are made in the porous skeleton, and the capacity on the low-voltage plateau is increased significantly. However, too much the element zinc may lead to excessive pores, reducing the structural stability of the porous skeleton. Therefore, the reversible capacity, low-plateau capacity, and structural stability of the hard carbon material can be further improved when the amount of the element zinc added is controlled to satisfy the following condition.

In some embodiments, the percentage of the element zinc with respect to the total mass of the hard carbon material is denoted by $A_2$ wt%, where $0.6 \leq A_2 \leq 1.2$. For example, the percentage $A_2$ wt% of the element zinc may be 0.6 wt%, 0.7 wt%, 0.9 wt%, 1.0 wt%, or 1.2 wt%, or within a range between any two of the foregoing values. The percentage of the element zinc can be tested using a device and method known in the art. For example, an inductively coupled plasma optical emission spectrometer may be used for analysis and test. Specifically, the plasma excitation light source can be used to vaporize, dissociate, or decompose the sample to atomic state. The atoms may be further ionized to ion state, and the atoms and ions are excited to emit light in the light source. The light emitted by the light source is decomposed into spectra arranged by wavelength by using the inductively coupled plasma optical emission spectrometer. A photoelectric device is used to detect the spectra, qualitative analysis is performed on the sample based on the measured spectral wavelengths, and quantitative analysis is performed based on intensity of the emitted light.

In some embodiments, the hard carbon material further includes the element hydrogen and the element carbon, and a percentage of the element hydrogen with respect to the total mass of the hard carbon material is denoted by $W_4$ wt%, and a percentage of the element carbon with respect to the total mass of the hard carbon material is denoted by $W_5$ wt%. The hard carbon material satisfies:

$$0.02 \leq W_4/W_5 \leq 0.20.$$

The inventors have conducted in-depth research on the hard carbon materials. The hard carbon material of this application is suitable for both lithium-ion batteries and sodium-ion batteries. The lithium-ion batteries have advantages such as high volumetric and mass energy density, environmental friendliness, high operating voltage, small size, light weight, and long cycle life. When applied to lithium-ion batteries, the hard carbon material of this application can improve the energy density and other properties of the lithium-ion batteries. Compared with lithium, sodium has a higher standard electrode potential, which leads to a lower energy density in the sodium-ion batteries than in the lithium-ion batteries. In addition, the large ionic radius makes it difficult for sodium ions to undergo intercalation and deintercalation reactions. The hard carbon material of this application is also suitable for sodium-ion batteries, facilitating intercalation of sodium ions into the hard carbon material and improving the energy density and other properties of the sodium-ion batteries.

The inventors have found that the reversible capacity and capacity at a low-plateau voltage of the hard carbon material can be further improved when the hard carbon material satisfies at least one of the following conditions.

In some embodiments, a lithium metal is used as a counter electrode of the hard carbon material, and in charge and discharge curves obtained by testing within a range of 0 V to 2.5 V vs Li$^+$/Li, a gram capacity measured in a range of 0 V (vs Li$^+$/Li) to 0.15 V (vs Li$^+$/Li) is denoted by $C_{11}$ mAh/g, and a gram capacity measured in the range of 0.15 V (vs Li$^+$/Li) to 0.8 V (vs Li$^+$/Li) is denoted by $C_{12}$ mAh/g, where the hard carbon material satisfies $1.6 \leq C_{11}/C_{12} \leq 2.1$. Optionally, $250 \leq C_{11} \leq 350$.

The hard carbon material is used as the negative electrode, and lithium metal (a lithium sheet with a diameter of 18 mm and a thickness of 0.6 mm) is used as the counter electrode. The hard carbon electrode, a separator, and the lithium sheet are stacked in sequence, followed by injection of electrolyte (1 mol/L of lithium salt LiPF$_6$) and packaging into button-type stainless-steel positive and negative electrode shells, so as to obtain a button cell. Testing is performed to obtain charge and discharge curves of the button cell, so as to obtain the gram capacity distribution during a delithiation process.

On condition that the hard carbon material according to some embodiments of this application satisfies the foregoing gram capacity relationship, the hard carbon material can further increase the capacity on the low-voltage plateau.

In some embodiments, a sodium metal is used as the counter electrode of the hard carbon material, and in charge and discharge curves obtained by testing within a range of 0 V to 2.5 V vs Na$^+$/ Na, a gram capacity measured in a range of 0 V (vs Na$^+$/ Na) to 0.15 V (vs Na$^+$/ Na) is denoted by $C_{21}$ mAh/g, and a gram capacity measured in the range of 0.15 V (vs Na$^+$/ Na) to 1.00 V (vs Na$^+$/ Na) is denoted by $C_{22}$ mAh/g, where the hard carbon material satisfies $3.55 \leq C_{21}/C_{22} \leq 3.95$. Optionally, $300 \leq C_{21} \leq 340$.

The hard carbon material is used as the negative electrode, and sodium metal (a sodium sheet with a diameter of 18 mm and a thickness of 0.6 mm) is used as the counter electrode. The hard carbon electrode, a separator, and the sodium sheet are stacked in sequence, followed by injection of electrolyte (1 mol/L of sodium salt NaPF$_6$) and packaging into button-type stainless-steel positive and negative electrode shells, so as to obtain a button cell. Testing is performed to obtain charge and discharge curves of the button cell, so as to obtain the gram capacity distribution during a sodium deintercalation process.

On condition that the hard carbon material according to some embodiments of this application satisfies the foregoing gram capacity relationship, the hard carbon material can further increase the capacity on the low-voltage plateau.

In some embodiments, in an X-ray diffraction (X-ray Diffraction, XRD) pattern of the hard carbon material, a diffraction peak appears in a range of a 2X scattering angle from 15° to 30°, and a 2X scattering angle of the diffraction peak is <24°. The interplanar spacing of the hard carbon material is large, which is conducive to transport of active ions such as lithium ions and sodium ions between layers of the hard carbon material.

In some embodiments, in a Raman spectrum pattern of the hard carbon material within a scanning range of 200 um * 500 um, a characteristic peak D appears in a wavenumber range of 1320 cm$^{-1}$ to 1370 cm$^{-1}$ and a characteristic peak G appears in a wavenumber range of 1570 cm$^{-1}$ to 1620 cm$^{-1}$, where a peak intensity of the characteristic peak D is $I_D$, a peak intensity of the characteristic peak G is $I_G$, and $0.5 < I_D/I_G \leq 1.5$.

In some embodiments, a particle size by volume $D_v50$ μm of the hard carbon material satisfies $3 \leq D_v50 \leq 15$. Physical definition of $D_v50$: a particle size at which the cumulative volume distribution percentage of a material reaches 50%, which can be tested using a method known in the art. For example, $D_v50$ may be determined with reference to GB/T 19077.1-2016 by using a laser particle size analyzer (for example, Malvern Master Size 3000).

In some embodiments, a particle size by volume $D_v99$, in μm, of the hard carbon material satisfies $10 \leq D_v99 \leq 45$. Physical definition of $D_v99$: a particle size at which the cumulative volume distribution percentage of a material reaches 99%, which can be tested using a method known in the art. For example, $D_v50$ may be determined with reference to GB/T 19077.1-2016 by using a laser particle size analyzer (for example, Malvern Master Size 3000).

When the particle size of the hard carbon material of this application satisfies the foregoing range, a diffusion distance of active ions in the hard carbon material is short, which is conducive to the full play of the gram capacity of the hard carbon material. In addition, a particle specific surface area of the hard carbon material is small and kinetic properties are good, helping improve the first-cycle coulombic efficiency of the hard carbon material.

In some embodiments, the hard carbon material further includes a carbon layer coated on the porous skeleton.

Due to etching by the porogen, the porous skeleton may have pore structures formed on its surface. The pore structures can provide more active sites for storing active ions, increasing the capacity of the hard carbon material on the low-voltage plateau. However, excess pore structures will lead to large specific surface area of the hard carbon material and formation of excess solid electrolyte interface (Solid Electrolyte Interface, SEI) films, degrading the first-cycle coulombic efficiency. In this application, a carbon layer is provided on the porous skeleton. In this way, the hard carbon material can improve the first-cycle Coulombic efficiency while achieving a high capacity on the low-voltage plateau.

Preparation method of hard carbon material

A second aspect of this application further provides a method for preparing a hard carbon material.

The method includes the following steps.

Step S100. Mix a carbon-containing precursor material, a porogen containing element zinc, and a first material containing a first element well into a mixed system.

Step S200. Perform heat treatment on the mixed system, so that the precursor material is carbonized and during a carbonization process, the porogen volatilizes and etches the precursor material to form a porous skeleton, where the porous skeleton contains the first element and the element zinc.

The first element includes at least one of the element nitrogen, the element sulfur, the element boron, the element phosphorus or the element selenium.

A percentage of the first element with respect to the total mass of the hard carbon material is denoted by $A_1$ wt%.

A percentage of the element zinc with respect to the total mass of the hard carbon material is denoted by $A_2$ wt%.

The hard carbon material satisfies $1.5 \leq A_1/A_2 \leq 5$.

Categories of the precursor material, porogen, and first material of this application are as described above, and not repeated herein. In this application, the three types of substances are mixed, facilitating formation of pores in the precursor material during the carbonization process. Mixing methods such as ball milling may be used.

In some embodiments, the heat treatment in step S200 may include a first heat treatment and a second heat treatment, and a temperature for the first heat treatment is lower than a temperature for the second heat treatment.

The first heat treatment may serve as a pre-carbonization process. For example, the mixed system is calcined in a range of 400°C to 700°C. This step helps settle the element zinc in the porogen on the precursor material, and also allows the element zinc to be uniformly distributed on the precursor material while ensuring uniform distribution of the first element on the precursor material. Optionally, after the first heat treatment, the mixed system may be crushed and graded, so that the particle size can better meet the production requirements.

The second heat treatment may serve as the carbonization process. For example, the mixed system is calcined in a range of 900°C to 1300°C, so that the precursor material is carbonized into the porous skeleton. In particular, the second heat treatment process can be implemented after crushing and grading, which helps obtain a hard carbon material with the particle size meeting the production requirements.

In some embodiments, the method further includes step S300: applying a carbon layer on the porous skeleton. A carbon source may be coated onto the porous skeleton by gas phase deposition (for example, chemical vapor deposition CVD), liquid phase sol-gel, pitch coating, or the like to form a carbon layer. Specific process parameters may be the same as parameters used in the prior art, and are not described herein.

Electrochemical apparatus

A third aspect of this application further provides an electrochemical apparatus. The electrochemical apparatus includes a negative electrode plate, where a negative electrode active substance of the negative electrode plate may include the hard carbon material according to any one of some embodiments of the first aspect of this application or a hard carbon material prepared using the method according to any one of some embodiments of the second aspect of this application.

In some embodiments, a value of voltage drop K per unit time of the electrochemical apparatus satisfies 0.01 mV/h≤K≤2 mV/h. The K value is an index for measuring the self-discharge rate of an electrochemical apparatus. When the K value falls within the foregoing range, the self-discharge performance of the electrochemical apparatus is excellent.

[Negative electrode plate]

The negative electrode plate is a negative electrode plate known in the art that can be used in electrochemical apparatuses. In some embodiments, the negative electrode plate includes a negative electrode current collector and a negative electrode active substance layer. The negative electrode active substance layer is provided on a surface of the negative electrode current collector. The negative electrode active substance layer contains a negative electrode active substance. The negative electrode active substance may include the hard carbon material according to any one of some embodiments of the first aspect of this application or a hard carbon material prepared using the method according to any one of some embodiments of the second aspect of this application.

In some embodiments, the negative electrode plate adopts a structure of a negative electrode plate known in the art that can be used in electrochemical apparatuses.

In some embodiments, the negative electrode current collector is metal, for example but not limited to, copper foil, nickel foil, stainless steel foil, titanium foil, nickel foam, copper foam, a polymer substrate coated with a conductive metal, or a combination thereof.

The negative electrode active substance may be the hard carbon material according to any one of some embodiments of the first aspect of this application or a hard carbon material prepared using the method according to any one of some embodiments of the second aspect of this application, and may also be selected from various conventionally-known substances, which can be used as the negative electrode active substance for electrochemical apparatuses and support reversible intercalation and deintercalation of active ions or reversible doping and dedoping of active ions.

In some embodiments, the negative electrode active substance includes at least one of a lithium metal, a lithium metal alloy, a carbon material, a material supporting lithium doping/dedoping, or a transition metal oxide. In some embodiments, the carbon material may be selected from various carbon materials known in the art that can be used as a carbon-based negative electrode active substance for electrochemical apparatuses. In some embodiments, the carbon material includes at least one of crystalline carbon or amorphous carbon. In some embodiments, the crystalline carbon is natural graphite or artificial graphite. In some embodiments, the crystalline carbon is amorphous, or in a sheet-like, flake-like, spherical, or fibrous shape. In some embodiments, the crystalline carbon is low crystalline carbon or high crystalline carbon. In some embodiments, the low crystalline carbon includes at least one of soft carbon or hard carbon. In some embodiments, the high crystalline carbon includes at least one of natural graphite, crystalline graphite, pyrolytic carbon, a mesophase pitch-based carbon fiber, mesophase carbon microbeads, mesophase pitch, or high-temperature calcined carbon.

In some embodiments, the high-temperature calcined carbon is petroleum or coke derived from coal tar pitch. In some embodiments, the amorphous carbon includes at least one of soft carbon, hard carbon, a product of mesophase pitch carbonization, or fired coke. In some embodiments, the negative electrode active substance includes a transition metal oxide. In some embodiments, the transition metal oxide includes at least one of vanadium oxide or lithium vanadium oxide. In some embodiments, the negative electrode active substance includes at least one of Si, SiOx (0<x<2), a Si/C composite, a Si-Q alloy, Sn, SnOz, a Sn-C composite or a Sn-R alloy, where Q is at least one selected from a group consisting of an alkali metal, an alkaline earth metal, elements in Group 13 to Group 16, a transition element, and a rare earth element, Q is not Si, R is at least one selected from an alkali metal, an alkaline earth metal, elements in Group 13 to Group 16, a transition element or a rare earth element, and R is not Sn. In some embodiments, Q and R include at least one of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, or Po.

In some embodiments, the negative electrode active substance layer further includes a negative electrode binder and a negative electrode conductive agent. In some embodiments, the negative electrode binder includes at least one of difluoroethylene-hexafluoropropylene (PVDF-co-HFP), polyvinylidene fluoride, polyacrylonitrile, polymethyl methacrylate, polyvinyl alcohol, carboxymethyl cellulose, hydroxypropyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyethylene, polypropylene, styrene-butadiene rubber, acrylic styrene-butadiene rubber, epoxy resin, or nylon. In some embodiments, the negative electrode conductive agent is used to provide conductivity for an electrode, and may include any conductive material that causes no chemical change. In some embodiments, the negative electrode conductive agent includes any one of a carbon-based material, a metal-based material, and a conductive polymer, or a mixture thereof. In some embodiments, the carbon-based material includes at least one of natural graphite, artificial graphite, carbon black, acetylene black, Ketjen black, or carbon fiber. In some embodiments, the metal-based material includes at least one of metal powder or metal fiber of copper, nickel, aluminum, silver, and the like. In some embodiments, the conductive polymer includes a polyphenylene derivative.

In some embodiments, a preparation method of negative electrode plate is a preparation method of negative electrode known in the art that can be used in electrochemical apparatuses. In some embodiments, during preparation of a negative electrode slurry, typically a solvent is added, a negative electrode active substance is added into a binder, and a conductive material and a thickener are added as required, and then they are dissolved or dispersed in the solvent to form the negative electrode slurry. The solvent is removed by evaporation during a drying process. The solvent is a solvent known in the art that can be used as the negative electrode active substance layer. For example, the solvent is, but not limited to, water. The thickener is a thickener known in the art that can be used as a thickener for the negative electrode active substance layer. For example, the thickener is, but not limited to, sodium carboxymethyl cellulose.

This application has no special limitations on mixing ratios of the negative electrode active substance, the binder, and the thickener in the negative electrode active substance layer, and the mixing ratios can be controlled based on the desired performance of the electrochemical apparatus.

[Positive electrode plate]

The electrochemical apparatus in some embodiments of this application may further include a positive electrode plate. The positive electrode plate is a positive electrode plate known in the art that can be used in electrochemical apparatuses. In some embodiments, the positive electrode plate includes a positive electrode current collector and a positive electrode active substance layer. The positive electrode active substance layer is provided on a surface of the positive electrode current collector. The positive electrode active substance layer contains a positive electrode active substance.

In some embodiments, the positive electrode plate adopts a structure of a positive electrode plate known in the art that can be used in electrochemical apparatuses.

In some embodiments, the positive electrode current collector is metal. For example, the metal is, but not limited to, aluminum foil.

The positive electrode active substance may be selected from various conventionally-known substances, which can be used as the positive electrode active substance for electrochemical apparatus and support reversible intercalation and deintercalation of active ions. For lithium-ion batteries, the positive electrode active substance typically contains lithium ions; and for sodium-ion batteries, the positive electrode active substance typically contains sodium ions. Lithium ions are used as an example in the following description.

In some embodiments, the positive electrode active substance includes lithium and a composite oxide selected from at least one of cobalt, manganese, and nickel. Specifically, the following compounds may be used: a mixture of at least one of $LiCoO_2$, $LiNiO_2$, $LiMnO_2$, $LiMn_2O_4$, $Li(Ni_aCo_bMn_c)O_2$ (0<a<1, 0<b<1, 0<c<1, a+b+c=1), $LiMn_2O_4LiNi_{1-y}Co_yO_2$, $LiCo_{1-y}Mn_yO_2$, $LiNi_{1-y}Mn_yO_2$ (0<y<1), $Li(Ni_aMn_bCo_c)04$ (0<a<2, 0<b<2, 0<c<2, a+b+c=2), $LiMn_{2-z}NizO_4$, $LiMn_{2-z}Co_zO_4$ (0<z<2), $Li(Ni_aCo_bAl_c)O_2$ (0<a<1, 0<b<1, 0<c<1, a+b+c=1), $LiCoPO_4$, or $LiFePO_4$. In some embodiments, the positive electrode active substance further includes at least one of sulfide, selenide, or halide.

In some embodiments, the positive electrode active substance layer further includes a positive electrode binder and a positive electrode conductive agent. The positive electrode binder is used to improve the performance of binding between particles of the positive electrode active substance and between the particles of the positive electrode active substance and the current collector. In some embodiments, the positive electrode binder includes at least one of polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene fluoride, polyethylene, polypropylene, styrene-butadiene rubber, acrylic (ester) styrene-butadiene rubber, epoxy resin or nylon. The positive electrode conductive agent is used to provide conductivity for an electrode, and may include any conductive material that causes no chemical change. In some embodiments, the positive electrode conductive agent includes at least one of natural graphite, artificial graphite, carbon black, acetylene black, Ketjen black, carbon fiber, metal powder, metal fiber or a polyphenylene derivative. In some embodiments, metal in the metal powder and the metal fiber includes at least one of copper, nickel, aluminum or silver.

In some embodiments, a preparation method of positive electrode plate is a preparation method of positive electrode plate known in the art that can be used in electrochemical apparatuses. In some embodiments, during preparation of a positive electrode slurry, typically a solvent is added, a positive electrode active substance is added into a binder, and a conductive material and a thickener are added as required, and then they are dissolved or dispersed in the solvent to form the positive electrode slurry. The solvent is removed by evaporation during a drying process. The solvent is a solvent known in the art that can be used as a positive electrode active substance layer. For example, the solvent is, without limitation to N-methylpyrrolidone (NMP).

[Separator]

The separator is a separator known in the art that can be used in electrochemical apparatuses, for example but not limited to, a polyolefin microporous membrane. In some embodiments, the separator includes at least of polyethylene (PE), an ethylene propylene copolymer, polypropylene (PP), an ethylene-butylene copolymer, an ethylene-hexene copolymer or an ethylene-methyl methacrylate copolymer.

In some embodiments, the separator is a single-layer separator or a multilayer separator.

In some embodiments, the separator is coated with a coating layer. In some embodiments, the coating layer includes at least one of an organic coating layer or an inorganic coating layer. The organic coating layer is selected from at least one of polyvinylidene fluoride, a vinylidene fluoride-hexafluoropropylene copolymer, polyacrylonitrile, polyimide, an acrylonitrile-butadiene copolymer, an acrylonitrile-styrene-butadiene copolymer, polymethyl methacrylate, polymethyl acrylate, polyethyl acrylate, an acrylic acid-styrene copolymer, polydimethylsiloxane, sodium polyacrylate or sodium carboxymethyl cellulose. The inorganic coating layer is selected from at least one of $SiO_2$, $Al_2O_3$, $CaO$, $TiO_2$, $ZnO_2$, $MgO$, $ZrO_2$ or $SnO_2$.

The application has no special limitations on the shape and thickness of the separator. A preparation method of separator may be a method well known in the art that can be used for preparing separators of electrochemical apparatuses.

[Electrolyte]

The electrochemical apparatus in some embodiments of this application may further include an electrolyte. The electrolyte of this application contains an electrolyte salt. The electrolyte salt is an electrolyte salt known in the art that is suitable for electrochemical apparatuses. Appropriate electrolyte salts may be selected for different electrochemical apparatuses. For example, a lithium-ion battery typically uses a lithium salt as the electrolyte salt. For another example, a sodium-ion battery typically uses a sodium salt as the electrolyte salt. Lithium-ion batteries are used as an example in the following description.

In some embodiments, the lithium salt includes at least one of an organic lithium salt or an inorganic lithium salt.

In some embodiments, the lithium salt includes or is selected from at least one of lithium hexafluorophosphate ($LiPF_6$), lithium hexafluoroantimonate ($LiSbF_6$), lithium hexafluoroarsenate ($LiAsF_6$), lithium perfluorobutanesulfonate ($LiC_4F_9SO_3$), lithium perchlorate ($LiClO_4$), lithium aluminate ($LiAlO_2$), lithium tetrachloroaluminate ($LiAlCl_4$), lithium bissulfonimide ($LiN(C_xF_{2x+1}SO_2)(C_yF_{2y+1}SO_2)$, where x and y are natural numbers), lithium chloride ($LiCl$) or lithium fluoride ($LiF$). In some embodiments, a mass percentage of the lithium salt in the electrolyte of this application is 10 wt% to 15 wt%, for example, may be 10%, 11%, 12%, 13%, 14%, 15%, or in any range therebetween.

The electrolyte of this application may further contain a non-aqueous organic solvent. In some embodiments, the non-aqueous organic solvent includes at least one of carbonate, carboxylate, an ether compound, a sulfone compound or another aprotic solvent. In some embodiments, a mass percentage of the non-aqueous organic solvent is 21% to 90%, for example, may be 21%, 30%, 40%, 50%, 60%, 70%, 80%, 90%, or in any range therebetween.

In some embodiments, the carbonate solvent includes at least one of dimethyl carbonate, diethyl carbonate, ethyl methyl carbonate, methyl propyl carbonate, ethylene propyl carbonate, dipropyl carbonate, ethylene carbonate, propylene carbonate, butylene carbonate or bis(2,2,2-trifluoroethyl)carbonate.

In some embodiments, the carboxylate solvent includes at least one of methyl acetate, ethyl acetate, n-propyl acetate, n-butyl acetate, methyl propionate, ethyl propionate, propyl propionate, butyl propionate, methyl butyrate, ethyl butyrate, propyl butyrate, butyl butyrate, $\gamma$-butyrolactone, valerolactone or butyrolactone.

In some embodiments, the ether compound solvent includes at least one of ethylene glycol dimethyl ether, diethylene glycol dimethyl ether, tetraethylene glycol dimethyl ether, dibutyl ether, tetrahydrofuran, 2-methyltetrahydrofuran, bis(2,2,2-trifluoroethyl) ether, 1,3-dioxane or 1,4-dioxane.

In some embodiments, the sulfone compound includes at least one of ethyl vinyl sulfone, methyl isopropyl sulfone, isopropyl sec-butyl sulfone or sulfolane.

The non-aqueous organic solvent in the electrolyte may be a single non-aqueous organic solvent or a mixture of multiple non-aqueous organic solvents. When a mixed solvent is used, a mixing ratio may be controlled based on the desired performance of the electrochemical apparatus.

The electrolyte of this application may further contain a functional additive, for example, a membrane forming additive or a positive electrode membrane forming additive. The membrane forming additive can form an interface membrane on a surface of the negative electrode plate and/or the positive electrode plate, so as to protect the negative electrode plate and/or the positive electrode plate. In some embodiments, the membrane forming additive may be a polynitrile additive, a sulfonate additive, or the like.

Based on the same inventive concept, this application further provides an electronic apparatus.

The electronic apparatus in this application may be any electronic apparatus, including but not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, and a lithium-ion capacitor. It should be noted that the electrochemical apparatus in this application is also applicable to energy storage power stations, sea transport vehicles, and air transport vehicles, in addition to the foregoing electronic apparatuses. The air transport vehicles include air transport vehicles in the atmosphere and air transport vehicles beyond the atmosphere.

In some embodiments, the electronic apparatus includes the foregoing electrochemical apparatus of this application.

The technical solution of this application will be further described by taking lithium-ion batteries as an example and with reference to comparative examples and examples, but is not limited thereto. Those skilled in the art will understand that the preparation method described in this application is merely an exemplary embodiment, and any modifications or replacements of the technical solution of this application, without departing from the scope of the technical solution of this application, shall fall within the protection scope of this application.

Reagents, materials, and instruments used in the following examples and comparative examples are all commercially available or synthesized unless otherwise specified.

Examples to comparative examples

Example 1-1. Preparation of lithium-ion battery

Example 1-1

1. Preparation of hard carbon material

400 parts by weight of zinc gluconate, 100 parts by weight of glucose, and 10 parts by weight of melamine were fully mixed by mechanical ball milling, transferred to a box furnace and calcined at 400°C for two hours under nitrogen protection, cooled, and crushed and graded to control $D_v99$ at 45 um. Then, graded powder was transferred to a nitrogen atmosphere protection furnace for two hours of secondary calcination at a calcination temperature of 1200°C. The temperature of the furnace was reduced to 900 degrees Celsius, methane gas was filled to perform CVD deposition for one hour, the methane gas was then cut off, and the furnace is cooled to room temperature so as to obtain the final product of hard carbon.

2. Preparation of negative electrode plate

The prepared hard carbon, styrene-butadiene rubber (SBR), and sodium carboxymethyl cellulose (CMC) were fully stirred and mixed at a weight ratio of 97:2:1 in an appropriate amount of deionized water to form a uniform negative electrode slurry, where a solid content of the negative electrode slurry is 40 wt%. The slurry is applied on the negative electrode current collector (copper foil), dried at 85°C, followed by cold pressing, cutting, and slitting, and then was dried in a vacuum at 120°C for 12 hours to obtain the negative electrode plate.

3. Preparation of positive electrode plate

Lithium cobalt oxide ($LiCoO_2$) was used as the positive electrode active substance of the lithium-ion battery.
The positive electrode active substance ($LiCoO_2$), a conductive agent Super P, and a binder polyvinylidene fluoride (PVDF) were fully stirred and mixed in an appropriate amount of N-methylpyrrolidone (NMP) solvent at a weight ratio of 97:1.4:1.6, so that a uniform positive electrode slurry was formed, where a solid content of the positive electrode slurry was 72 wt%. The slurry was applied on the positive electrode current collector (aluminum foil), dried at 85°C, followed by cold pressing, cutting, and slitting, and then was dried in a vacuum at 85°C for four hours to obtain the positive electrode plate.

4. Preparation of electrolyte

In a dry argon atmosphere glove box, ethylene carbonate (EC) and diethyl carbonate (DEC) were mixed according to a mass ratio of EC:DEC=50:50, 2% (volume ratio) of vinylene carbonate was added, dissolved, and fully stirred, and then a lithium salt $LiPF_6$ or a sodium salt $NaPF_6$ was added and mixed to obtain a uniform electrolyte, where the concentration of $LiPF_6$ or $NaPF_6$ was 1 mol/L.

5. Preparation of a separator

A 9 μm-thick porous polyethylene (PE) polymer membrane coated with $Al_2O_3$ was used as the separator.

6. Preparation of a lithium-ion full battery/sodium-ion full battery

Preparation of full battery: the positive electrode plate, the separator, and the negative electrode plate were stacked in sequence, so that the separator was placed between the positive electrode plate and the negative electrode plate for separation, followed by winding, tab soldering, placement in an outer packaging aluminum foil film, and electrolyte injection. A complete pouch battery was obtained after processes such as vacuum packaging, standing, formation, shaping, and capacity testing.

Example 1-2

In Example 1-2, hard carbon was prepared using a method similar to that in Example 1-1, with a difference in that parts by weight of the raw materials were adjusted to: 268 parts by weight of zinc gluconate, 133 parts by weight of glucose, and 10 parts by weight of melamine.

Example 1-3

In Example 1-3, hard carbon was prepared using a method similar to that in Example 1-1, with a difference in that parts by weight of the raw materials were adjusted to: 532 parts by weight of zinc gluconate, 67 parts by weight of glucose, and 10 parts by weight of melamine.

Example 1-4

In Example 1-4, hard carbon was prepared using a method similar to that in Example 1-1, with a difference in that parts by weight of the raw materials were adjusted to: 400 parts by weight of zinc gluconate, 100 parts by weight of glucose, and 5 parts by weight of melamine.

Example 1-5

In Example 1-5, hard carbon was prepared using a method similar to that in Example 1-1, with a difference in that parts by weight of the raw materials were adjusted to: 400 parts by weight of zinc gluconate, 100 parts by weight of glucose, and 15 parts by weight of melamine.

Example 1-6

In Example 1-6, hard carbon was prepared using a method similar to that in Example 1-1, with a difference in that parts by weight of the raw materials were adjusted to: 400 parts by weight of zinc gluconate, 100 parts by weight of glucose, and 20 parts by weight of melamine.

Example 1-7

In Example 1-7, hard carbon was prepared using a method similar to that in Example 1-5, with a difference in that the raw material melamine was replaced with carbamide.

Example 1-8

In Example 1-8, hard carbon was prepared using a method similar to that in Example 1-5, with a difference in that the raw material glucose was replaced with sucrose.

Comparative Example 1-1. Preparation of lithium-ion battery

In Comparative Example 1-1, hard carbon was prepared using a method similar to that in Example 1-1, with a difference in that the raw material was adjusted to 100 parts by weight of glucose, without addition of zinc gluconate and melamine.

Comparative Example 1-2. Preparation of lithium-ion battery

In Comparative Example 1-2, hard carbon was prepared using a method similar to that in Example 1-1, with a difference in that the raw materials were adjusted to 400 parts by weight of zinc gluconate and 100 parts by weight of glucose, without addition of melamine.

Comparative Example 1-3. Preparation of lithium-ion battery

In Comparative Example 1-3, hard carbon was prepared using a method similar to that in Example 1-1, with a difference in that the raw materials were adjusted to 10 parts by weight of melamine and 100 parts by weight of glucose, without addition of zinc gluconate.

Example 2. Preparation of lithium-ion battery

Example 2-1

In Example 2-1, hard carbon was prepared using a method similar to that in Example 1-5, with a difference in that the raw material melamine was replaced with diphenyl selenium.

Example 2-2

In Example 2-2, hard carbon was prepared using a method similar to that in Example 1-5, with a difference in that the raw material melamine was replaced with sulfur powder.

Example 2-3

In Example 2-3, hard carbon was prepared using a method similar to that in Example 1-5, with a difference in that the raw material melamine was replaced with ammonium dihydrogen phosphate.

Example 2-4

In Example 2-4, hard carbon was prepared using a method similar to that in Example 1-5, with a difference in that the raw material melamine was replaced with boric acid.

Example 3-1

In Example 3-1, hard carbon was prepared using a method similar to that in Example 1-5, with a difference in that the particle size $D_v99$ was controlled at 70 $\mu$m during crushing and grading.

Example 3-2

In Example 3-2, hard carbon was prepared using a method similar to that in Example 1-5, with a difference in that the particle size $D_v99$ was controlled at 21 $\mu$m during crushing and grading.

Example 4. Preparation of sodium-ion battery

1. Preparation of hard carbon material

In Example 4-1, hard carbon was prepared using a method similar to that in Example 1-1, with a difference in that the temperature of secondary calcination was adjusted to 1400°C.

2. Preparation of negative electrode plate

The prepared hard carbon, styrene-butadiene rubber (SBR), and sodium carboxymethyl cellulose (CMC) were fully stirred and mixed at a weight ratio of 97:2:1 in an appropriate amount of deionized water to form a uniform negative electrode slurry, where a solid content of the negative electrode slurry is 40 wt%. The slurry is coated on the negative electrode current collector (aluminum foil), dried at 85°C, followed by cold pressing, cutting, and slitting, and then was dried in a vacuum at 120°C for 12 hours to obtain the negative electrode plate.

3. Preparation of positive electrode plate

Copper-nickel-iron-manganese oxide ($NaCu_{1/9}Ni_{2/9}Fe_{1/3}Mn_{1/3}O_2$) was used as a positive electrode active substance of the sodium-ion battery.

The positive electrode active substance ($NaCu_{1/9}Ni_{2/9}Fe_{1/3}Mn_{1/3}O_2$), a conductive agent Super P, and a binder polyvinylidene fluoride (PVDF) were fully stirred and mixed in an appropriate amount of N-methylpyrrolidone (NMP) solvent at a weight ratio of 97:1.4:1.6, so that a uniform positive electrode slurry was formed, where a solid content of the positive electrode slurry was 72 wt%. The slurry was applied on the positive electrode current collector (aluminum foil), dried at 85°C, followed by cold pressing, cutting, and slitting, and then was dried in a vacuum at 85°C for four hours to obtain the positive electrode plate.

4. Preparation of electrolyte

In a dry argon atmosphere glove box, ethylene carbonate (EC) and diethyl carbonate (DEC) were mixed according to a mass ratio of EC:DEC=50:50, 2% (volume ratio) of fluoroethylene carbonate was added, dissolved, and fully stirred, and then a sodium salt $NaPF_6$ was added and mixed to obtain a uniform electrolyte, where the concentration of $NaPF_6$ was 1 mol/L.

5. Preparation of a separator

A 9 μm-thick porous polyethylene (PE) polymer membrane coated with $Al_2O_3$ was used as the separator, with a porosity of 35%.

6. Preparation of sodium-ion full battery

Preparation of full battery: the positive electrode plate, the separator, and the negative electrode plate were stacked in sequence, so that the separator was placed between the positive electrode plate and the negative electrode plate for separation, followed by winding, tab soldering, placement in an outer packaging aluminum foil film, and electrolyte injection. A complete pouch battery was obtained after processes such as vacuum packaging, standing, formation, shaping, and capacity testing.

Example 4-2

In Example 4-2, the sodium-ion full battery was prepared using a method similar to that in Example 4-1. The difference from Example 4-1 is that in Example 4-2, hard carbon was prepared using a method similar to that in Example 1-5 and the temperature of secondary calcination was adjusted to 1400°C.

Example 4-3

In Example 4-3, the sodium-ion full battery was prepared using a method similar to that in Example 4-1. The difference from Example 4-1 is that in Example 4-3, hard carbon was prepared using a method similar to that in Example 1-6 and the temperature of secondary calcination was adjusted to 1400°C.

Example 4-4

In Example 4-4, the sodium-ion full battery was prepared using a method similar to that in Example 4-1. The difference from Example 4-1 is that in Example 4-4, hard carbon was prepared using a method similar to that in Example 1-7 and the temperature of secondary calcination was adjusted to 1400°C.

Comparative Example 4-1

In Comparative Example 4-1, the sodium-ion full battery was prepared using a method similar to that in Example 4-1. The difference from Example 4-1 is that in Comparative Example 4-1, hard carbon was prepared using a method similar to that in Comparative Example 1-1 and the temperature of secondary calcination was adjusted to 1400°C.

Testing:

1. Method for testing button cell charge and discharge curves

Preparation of button cell: metallic lithium or metallic sodium was used as a counter electrode of the button cell. A lithium/sodium sheet with a diameter of 18 mm and a thickness of 0.6 mm, a separator, and a hard carbon electrode were stacked in sequence, and an electrolyte was added, followed by packaging in button-type stainless-steel positive and negative electrode shells, so as to obtain the button cell.

In an environment of 25°C, the assembled button cell was left standing for five hours and then a charging and discharging test was performed. The test process was as follows: the button cell was constant-current discharged to 0 V at a current density of 0.1 mA/cm$^2$, and then discharged at a constant voltage of 0 V until the current drops to 12 uA/cm$^2$. The discharging (lithiation/sodium intercalation) process was completed. After five minutes of standing, the charging (delithiation/sodium deintercalation) test was started. The test process was as follows: the button cell was constant-current charged to 2 V at a current density of 0.1 mA/cm$^2$.

Gram capacities of initial discharging and initial charging were recorded. First-cycle coulombic efficiency=initial charge capacity/initial discharge capacity * 100%.

The gram capacities and voltages of the charging and discharging process were recorded, and gram capacity distribution in each voltage range during the delithiation/sodium deintercalation process was recorded. For example, in the first delithiation curve, capacities of 0 V to 0.15 V and 0.15 V to 0.8 V were recorded; and in the first sodium deintercalation curve, capacities of 0 V to 0.15 V and 0.15 V to 1 V were recorded.

2. Method for testing energy density ED

In an environment of 25°C, the lithium-ion battery or sodium-ion battery was charged at a constant current of 0.2C to a voltage of 4.48 V or 3.95 V, charged at a constant voltage, and then discharged at a constant current of 0.2C to a voltage of 2 V. This was recorded as one cycle. The discharge capacity and discharge energy of the first cycle were recorded. An average discharge voltage can be obtained by dividing the discharge energy by the discharge capacity. The length, width and height of the battery at 50% SOC were tested to obtain the volume of the battery. Therefore:

Energy density ED = discharge capacity $\times$ average discharge voltage/cell volume.

3. Raman testing

An electrode plate containing the hard carbon material was cut by ion polishing to obtain a section, and the section was placed on the test bench of a Raman spectrometer and tested after focusing. A range of 200 um*500 um was selected for the test, and more than 200 points equally spaced in the range were tested, with the test range of each point falling between 1000 cm$^{-1}$ and 2000 cm$^{-1}$. A peak appearing in a wavenumber range of 1320 cm$^{-1}$ to 1370 cm$^{-1}$ was recorded as peak D, a peak appearing in a wavenumber range of 1570 cm$^{-1}$ to 1620 cm$^{-1}$ was recorded as peak G, an intensity ratio of $I_D/I_G$ was calculated for each point, and then an average value of multiple points was calculated as a final intensity ratio of $I_D/I_G$.

4. XRD testing

A powder XRD test was performed on the hard carbon material, with a test scanning range of a 2X scattering angle from 10 degrees to 60 degrees. The obtained scanning curve was sorted. A peak (with a half width being greater than 3 degrees) that appears in a range of a 2X scattering angle from 15° to 30° was recorded as peak A, and the 2X scattering angle of peak A was obtained.

5. Elemental analysis

Digestion testing was performed on the element Zn by using an inductively coupled plasma optical emission spectrometer. Elements such as N/S/H/C were tested using an elemental analyzer, and atmosphere content was measured after the hard carbon material was fully burned in oxygen, so as to obtain the percentages and contents of the elements. Elements such as P/B/Se were quantitatively obtained by XPS.

6. $D_v50$ and $D_v99$ tests

In this application, a Malvern particle size tester was used to measure particle sizes of hard carbon particles. The hard carbon particle material was dispersed in a dispersant (ethanol). After 30 minutes of ultrasonication, the sample was put into the Malvern particle size tester for testing. The particle size where the cumulative distribution by volume reaches 50% as counted from the small particle size side is $D_v50$ of the hard carbon particles, that is, the median particle size. The particle size where the cumulative distribution by volume reaches 99% as counted from the small particle size side is $D_v99$ of the hard carbon particles.

Test results

The test results are shown in Table 1 to Table 4.

**Table 1**

| No. | Percentage of the element Zn/wt% | Percentage of the element N/wt% | Content ratio of the element N to the element Zn | Gram capacity in the range of 0 V to 0.15 V/Gram capacity in the range of 0.15 V to 0.8 V | Total reversible capacity/first-cycle coulombic efficiency | ED (Wh/L) |
|---|---|---|---|---|---|---|
| Example 1-1 | 0.8874 | 2.7 | 3.04 | 312/173=1.80 | 570/82.8% | 695 |
| Example 1-2 | 1.0200 | 2.6 | 2.55 | 309/179=1.73 | 566/83.0% | 694 |
| Example 1-3 | 1.2000 | 2.7 | 2.25 | 317/170=1.86 | 582/83.0% | 701 |
| Example 1-4 | 0.8100 | 1.9 | 2.35 | 296/185=1.6 | 550/83.0% | 686 |
| Example 1-5 | 1.0200 | 3.5 | 3.43 | 341/178=1.92 | 600/82.0% | 705 |
| Example 1-6 | 1.0400 | 3.7 | 3.56 | 337/177=1.9 | 599/80.0% | 694 |
| Example 1-7 | 0.9900 | 3.4 | 3.43 | 320/173=1.85 | 590/83.0% | 704 |

| No. | Percentage of the element Zn/wt% | Percentage of the element N/wt% | Content ratio of the element N to the element Zn | Gram capacity in the range of 0 V to 0.15 V/Gram capacity in the range of 0.15 V to 0.8 V | Total reversible capacity/first-cycle coulombic efficiency | ED (Wh/L) |
|---|---|---|---|---|---|---|
| Example 1-8 | 1.1000 | 4.5 | 4.09 | 336/190=1.77 | 605/80.0% | 695 |
| Comparative example 1-1 | 0 | 0.0 | / | 140/137=1.02 | 360/78.0% | 550 |
| Comparative example 1-2 | 0.0018 | 0.0 | 0.00 | 252/130=1.94 | 462/85.0% | 646 |
| Comparative example 1-3 | 0 | 3.3 | / | 258/191=1.35 | 525/78.0% | 655 |

As seen from Table 1, compared with Comparative Example 1-1, the reversible capacity of the sample is increased rapidly after zinc salt is added in Comparative Example 1-2, with the capacity increase mainly in a range from 0 V to 0.15 V. This indicates that the addition of zinc salt helps increase the capacity in the low-voltage plateau segment, attributed to the increased pore volume that improves the capacity in the low-voltage plateau segment.

Compared with Comparative Example 1-1, the heteroatom element N is added in Comparative Example 1-3, which can increase the defect concentration of the sample, thereby increasing the capacity of the slash segment of 0.15 V to 0.8 V. Moreover, the element N can also enhance the lithium affinity of the sample, improving the capacity in the low-voltage plateau segment.

Compared with the comparative examples, the element zinc and the heteroatom element N are added in Examples 1-1 to 1-8 (as shown in FIG. 1, which shows charge and discharge curves of the lithium-ion battery in Example 1-5). The element zinc helps increase the capacity in the low-voltage plateau segment, and the element nitrogen helps increase the capacity in the slash segment of 0.15 V to 0.8 V. Moreover, the element N can increase the lithium affinity of the sample, further improving the capacity in the low-voltage plateau segment significantly. With the higher capacity of the hard carbon in the low-voltage plateau segment, the total capacity and first-cycle coulombic efficiency are improved, so that the energy density ED is dramatically increased compared with Comparative Examples 1 and 2. For the button cell, its high voltage plateau makes its voltage output in the full battery low, reducing its energy density. Therefore, the key to increasing the energy density ED is to improve the gram capacity of the button cell in the low-voltage plateau segment of 0 V to 0.15 V.

## Table 2

| No. | Percentage of the element Zn/wt% | Percentage of the heteroelement/wt% | Content ratio of the heteroelement to the element Zn | Gram capacity in the range of 0 V to 0.15 V/Gram capacity in the range of 0.15 V to 0.8 V | Total reversible capacity/first-cycle coulombic efficiency | ED (Wh/L) |
|---|---|---|---|---|---|---|
| Example 2-1 | 1.11 | Se/3.5 | 3.15 | 285/140=2.04 | 550/84% | 691 |
| Example 2-2 | 1.09 | S/2.5 | 2.29 | 288/139=2.07 | 559/83% | 690 |
| Example 2-3 | 0.93 | P/2.7 | 2.90 | 277/150=1.85 | 543/82% | 677 |
| Example 2-4 | 0.82 | B/2.9 | 3.54 | 251/136=1.84 | 520/80% | 656 |

As can be seen from Table 2, replacing the element N with other inorganic heteroatoms in Examples 2-1 to 2-4 can still increase the lithium affinity of the sample, further improving the capacity in the low-voltage plateau segment significantly.

## Table 3

| No. | Position of XRD peak 002 | Raman Id/Ig | H/C Content ratio | Dv50 (μm) | Dv99 (μm) | Total reversible capacity/first-cycle coulombic efficiency | ED (Wh/L) |
|---|---|---|---|---|---|---|---|
| Example 1-5 | 21 | 0.99 | 0.035 | 12 | 45 | 600/82.0% | 705 |
| Example 3-1 | 21 | 0.98 | 0.035 | 18 | 70 | 596/82.0% | 702 |
| Example 3-2 | 21 | 1.02 | 0.035 | 8 | 21 | 606/81.5% | 704 |

As can be seen from Table 3, in the XRD diffraction pattern of the hard carbon materials prepared in Example 1-5, Example 3-1 and Example 3-2, the 2X diffraction peak of peak 002 appears at about 21°. This indicates that the interplanar spacing of the hard carbon materials is large, which is conducive to the transport of lithium ions between layers.

Examples 1-5, 3-1 and 3-2 also show that the particle size has a slight effect on the sample. For larger particles, the diffusion distance is long, which is not conducive to the full play of the gram capacity. For small particles, the specific surface area BET is large and the first-cycle coulombic efficiency is low. Therefore, the particle size should be controlled within an appropriate range.

**Table 4**

| No. | Gram capacity in the range of 0 V to 0.15 V/Gram capacity in the range of 0.15 V to 0.8 V | Total reversible capacity/first-cycle coulombic efficiency | ED (Wh/L) |
|---|---|---|---|
| Example 4-1 | 255/70=3.64 | 324/90.0% | 285 |
| Example 4-2 | 265/68=3.90 | 338/91.0% | 292 |
| Example 4-3 | 263/70=3.76 | 340/91.5% | 294 |
| Example 4-4 | 232/65=3.57 | 300/88.0% | 273 |
| Comparative example 4-1 | 200/62=3.22 | 270/85.0% | 256 |

As can be seen from Table 4, compared with Comparative Example 4-1, adding zinc salt and heteroatom N to the sodium-ion battery can effectively improve the capacity of the sample in the low-voltage plateau segment of 0 V to 0.15 V, so that the capacity values in the range of 0 V to 0.15 V/0.15 V to 1 V are increased, helping reduce the average potential of the negative electrode plate and increase the average output potential of the full battery, thereby increasing the energy density. In addition, due to the significant capacity increase in the range of 0 V to 0.15 V, the total reversible capacity is significantly increased, and the energy density is also improved.

Although illustrative embodiments have been demonstrated and described, a person skilled in the art should understand that the foregoing embodiments are not to be construed as limiting this application, and that the embodiments may be changed, replaced, and modified without departing from theprinciple, and scope of this application.

## Claims

1.  A hard carbon material, comprising a porous skeleton, a first element and element zinc, wherein the first element comprises at least one of element nitrogen, element sulfur, element boron, element phosphorus or element selenium;

    a percentage of the first element with respect to a total mass of the hard carbon material is denoted by $A_1$ wt%;
    a percentage of the element zinc with respect to the total mass of the hard carbon material is denoted by $A_2$ wt%; and
    the hard carbon material satisfies $1.5 \leq A_1/A_2 \leq 5$.

2.  The hard carbon material according to claim 1, wherein the first element comprises the element nitrogen, and $2 \leq A_1/A_2 \leq 4.5$, and/or
    the first element comprises the element nitrogen, and a percentage of the element nitrogen with respect to the total mass of the hard carbon material is denoted by $W_1$ wt%, wherein $2 \leq W_1 \leq 5$.

3.  The hard carbon material according to claim 1 or 2, wherein the first element comprises at least one of the element sulfur, the element boron, the element phosphorus or the element selenium, and $2 \leq A_1/A_2 \leq 4$; and/or
    the first element comprises at least one of the element sulfur, the element boron, the element phosphorus or the element selenium, and a percentage of the first element with respect to the total mass of the hard carbon material is denoted by $W_2$ wt%, wherein $2.5 \leq W_2 \leq 9$.

4.  The hard carbon material according to any one of claims 1 to 3, wherein the percentage of the element zinc with respect to the total mass of the hard carbon material is denoted by $A_2$ wt%, and $0.6 \leq A_2 \leq 1.2$.

5.  The hard carbon material according to any one of claims 1 to 4, wherein a lithium metal is used as a counter electrode of the hard carbon material, and in charge and discharge curves obtained by testing within a range of 0 V to 2.5 V vs $Li^+/Li$,

    a gram capacity measured in a range of 0 V (vs $Li^+/Li$) to 0.15 V (vs $Li^+/Li$) is denoted by $C_{11}$ mAh/g; and
    a gram capacity measured in a range of 0.15 V (vs $Li^+/Li$) to 0.8 V (vs $Li^+/Li$) is denoted by $C_{12}$ mAh/g, wherein the hard carbon material satisfies $1.6 \leq C_{11}/C_{12} \leq 2.1$; and
    optionally, $250 \leq C_{11} \leq 350$.

6.  The hard carbon material according to any one of claims 1 to 5, wherein a sodium metal is used as the counter electrode of the hard carbon material, and in charge and discharge curves obtained by testing within a range of 0 V to 2.5 V vs Na$^+$/ Na;

a gram capacity measured in a range of 0 V (vs Na$^+$/ Na) to 0.15 V (vs Na$^+$/ Na) is denoted by $C_{21}$ mAh/g; and

a gram capacity measured in a range of 0.15 V (vs Na+/ Na) to 1.00 V (vs Na+/ Na) is denoted by $C_{22}$ mAh/g, wherein

the hard carbon material satisfies $3.55 \leq C_{21}/C_{22} \leq 3.95$; and

optionally, $300 \leq C_{21} \leq 340$.

7. The hard carbon material according to any one of claims 1 to 6, wherein

in an X-ray diffraction pattern of the hard carbon material, a diffraction peak appears in a range of a 2X scattering angle from 15° to 30°, and a 2X scattering angle of the diffraction peak is <24°; and/or

in a Raman spectrum pattern of the hard carbon material within a scanning range of 200 um * 500 um, a characteristic peak D appears in a wavenumber range of 1320 cm$^{-1}$ to 1370 cm$^{-1}$ and a characteristic peak G appears in a wavenumber range of 1570 cm$^{-1}$ to 1620 cm$^{-1}$, wherein a peak intensity of the characteristic peak D is $I_D$, a peak intensity of the characteristic peak G is $I_G$, and $0.5 < I_D/I_G \leq 1.5$.

8. The hard carbon material according to any one of claims 1 to 7, wherein the hard carbon material further satisfies the following condition (1) and/or condition (2):

(1) a particle size by volume $D_v 50$ in $\mu$m of the hard carbon material satisfies $3 \leq D_v 50 \leq 15$; or

(2) a particle size by volume $D_v 99$ in $\mu$m of the hard carbon material satisfies $10 \leq D_v 99 \leq 45$.

9. The hard carbon material according to any one of claims 1 to 8, wherein the hard carbon material further comprises a carbon layer coated on the porous skeleton.

10. A method for preparing a hard carbon material, comprising:

mixing a carbon-containing precursor material, a porogen containing element zinc, and a first material containing a first element into a mixed system; and

performing a heat treatment on the mixed system, so that the precursor material is carbonized and during a carbonization process, the porogen volatilizes and etches the precursor material to form a porous skeleton, wherein

the first element comprises at least one of element nitrogen, element sulfur, element boron, element phosphorus or element selenium.

a percentage of the first element with respect to a total mass of the hard carbon material is denoted by $A_1$ wt%; and

a percentage of the element zinc with respect to the total mass of the hard carbon material is denoted by $A_2$ wt%; wherein

the hard carbon material satisfies $1.5 \leq A_1/A_2 \leq 5$.

11. The method according to claim 10, wherein

the heat treatment comprises a first heat treatment and a second heat treatment, and a temperature for the first heat treatment is lower than a temperature for the second heat treatment, and/or

the porous skeleton is coated with a carbon layer.

12. An electrochemical apparatus, comprising a negative electrode plate; wherein the negative electrode plate comprises the hard carbon material according to any one of claims 1 to 9 or a hard carbon material prepared using the method according to any one of claims 10 and 11.

13. An electronic apparatus, comprising the electrochemical apparatus according to claim 12.

FIG. 1

## INTERNATIONAL SEARCH REPORT

| International application No. |
| --- |
| **PCT/CN2023/091366** |

### A. CLASSIFICATION OF SUBJECT MATTER

H01M4/62(2006.01)i; H01M4/133(2010.01)i; H01M10/0525(2010.01)i; C01B32/00(2017.01)i

According to International Patent Classification (IPC) or to both national classification and IPC

### B. FIELDS SEARCHED

Minimum documentation searched (classification system followed by classification symbols)

IPC: H01M C01B

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT; ISI: 硬碳, 掺杂, 杂原子, 氮, 磷, 硼, 硒, 锌, 活化, 造孔, hard, carbon, dop+, N, B, P, Se, Zn, zinc, porous

### C. DOCUMENTS CONSIDERED TO BE RELEVANT

| Category* | Citation of document, with indication, where appropriate, of the relevant passages | Relevant to claim No. |
| --- | --- | --- |
| PX | CN 115332538 A (NINGDE AMPEREX TECHNOLOGY LTD.) 11 November 2022 (2022-11-11)<br>description, paragraphs [0004]-[0151], and figure 1 | 1-13 |
| X | CN 110289418 A (GROUP14 TECHNOLOGIES, INC.) 27 September 2019 (2019-09-27)<br>description, paragraphs [0003]-[0328], and figures 1-14 | 1-4, 7-9, 12, 13 |
| X | WO 2021189408 A1 (NINGDE AMPEREX TECHNOLOGY LTD.) 30 September 2021 (2021-09-30)<br>description, page 1, line 16 to page 17, line 21, and figures 1-3 | 1-3, 7-9, 12, 13 |
| A | CN 114303257 A (NINGDE AMPEREX TECHNOLOGY LTD.) 08 April 2022 (2022-04-08)<br>entire document | 1-13 |
| A | CN 106374092 A (CENTRAL SOUTH UNIVERSITY) 01 February 2017 (2017-02-01)<br>entire document | 1-13 |
| A | CN 111017924 A (DONGGUAN UNIVERSITY OF TECHNOLOGY) 17 April 2020 (2020-04-17)<br>entire document | 1-13 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 June 2023** | **29 June 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/091366** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 114988387 A (JINAN UNIVERSITY) 02 September 2022 (2022-09-02)<br>      entire document | 1-13 |
| A | ZHANG, Xingshuai et al. "N-doped porous carbocatalyst engineering via modulating the crystalline size of ZIF-8 for continuous H2S selective oxidation"<br>*Applied Materials Today,* Vol. 25, 26 October 2021 (2021-10-26),<br>ISSN: 2352-9407,<br>      page 101228 (1-11) | 1-13 |

Form PCT/ISA/210 (second sheet) (July 2022)

## INTERNATIONAL SEARCH REPORT
### Information on patent family members

International application No.

**PCT/CN2023/091366**

| Patent document cited in search report | | | Publication date (day/month/year) | Patent family member(s) | | | Publication date (day/month/year) |
|---|---|---|---|---|---|---|---|
| CN | 115332538 | A | 11 November 2022 | None | | | |
| CN | 110289418 | A | 27 September 2019 | US | 2020280070 | A1 | 03 September 2020 |
| | | | | US | 2016344030 | A1 | 24 November 2016 |
| | | | | WO | 2014201275 | A2 | 18 December 2014 |
| | | | | WO | 2014201275 | A3 | 05 February 2015 |
| WO | 2021189408 | A1 | 30 September 2021 | JP | 2022529549 | A | 23 June 2022 |
| | | | | JP | 7190030 | B2 | 14 December 2022 |
| | | | | EP | 4131498 | A1 | 08 February 2023 |
| CN | 114303257 | A | 08 April 2022 | WO | 2022266797 | A1 | 29 December 2022 |
| CN | 106374092 | A | 01 February 2017 | None | | | |
| CN | 111017924 | A | 17 April 2020 | None | | | |
| CN | 114988387 | A | 02 September 2022 | CN | 114988387 | B | 21 February 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211248809